# EUROPEAN PATENT SPECIFICATION

(11) **EP 3 434 455 B1**
(45) Date of publication and mention of the grant of the patent: **12.05.2021**
(21) Application number: 18185895.2
(22) Date of filing: 26.07.2018
(51) Int. Cl.: B29C 69/00, B65B 7/16, B65B 41/06, B65B 7/01, B65B 7/28, A24D 3/06, B29C 65/02, B29C 65/78, B29L 31/00

(54) **METHOD AND MANUFACTURING MACHINE FOR THE PRODUCTION OF CAPSULES FOR SMOKING ARTICLES, IN PARTICULAR FOR FILTERS, DESIGNED TO CONTAIN A LIQUID TO BE USED IN THE COOLING OF THE SMOKE**
VERFAHREN UND FERTIGUNGSMASCHINE ZUR HERSTELLUNG VON KAPSELN FÜR RAUCHARTIKEL, INSBESONDERE FÜR FILTER, DIE DAFÜR KONZIPIERT SIND, EINE FLÜSSIGKEIT ZUR KÜHLUNG DES RAUCHS AUFZUNEHMEN
PROCÉDÉ ET MACHINE DE PRODUCTION DE CAPSULES POUR ARTICLES À FUMER, NOTAMMENT POUR DES FILTRES, CONÇUES POUR CONTENIR UN LIQUIDE DESTINÉ À ÊTRE UTILISÉ DANS LE REFROIDISSEMENT DE LA FUMÉE

(30) Priority: 26.07.2017 IT 201700085374
(43) Date of publication of application: 30.01.2019
(73) Proprietor: G.D SOCIETA' PER AZIONI, 40133 Bologna (IT)
(72) Inventor: PARAZZA, Davide, 40133 Bologna (IT); MALDOTTI, Sergio, 44123 Ferrara (IT); BICHICCHI, Massimo, 40048 San Benedetto Val di Sambro (BO) (IT); ROMAGNOLI, Stefano, 40033 Casalecchio Di Reno (BO) (IT); TUGNOLI, Massimo, 40050 Argelato (BO) (IT); FEDERICI, Luca, 40135 Bologna (IT)
(74) Representative: Musconi, Roberta

(56) References cited:
- EP-A1- 2 888 959
- JP-A- H05 330 503
- US-B2- 6 684 604

## Description

### TECHNICAL FIELD

The present invention relates to a method and to a manufacturing machine for the production of capsules for smoking articles, in particular for filters, designed to contain a liquid to be used in the cooling of the smoke.

### PRIOR ART

Recently, the use of capsules for smoking articles has been proposed, in particular for filters, designed to contain a liquid to be used in the cooling of the smoke.

In particular, the capsules are designed to contain water or a mixture of water and a flavour.

Typically, said capsules comprise a cup-shaped body preferably made in one piece, for example made of a plastic material, defined by a tubular side wall and, at one end, by a bottom wall or bottom element. The side wall has a longitudinal axis and delimits, with the bottom element, a compartment which is adapted to contain a predetermined amount of liquid. The side wall can be provided with a plurality of ribs which extend in a cantilever fashion from the outer surface of the side wall, extend over the entire length of the side wall itself and are uniformly distributed around the longitudinal axis.

The bottom wall is connected at a given height of the side wall and the connection between the bottom wall and the inner surface of the side wall is made by means of a weakened profile so as to allow, in use, the breaking under the action of a force imparted from the outside in order to pour out the liquid contained inside the compartment.

The compartment is open at the top and is closed by a cover conveniently formed by a film or a wrap made of PET/PE. The capsule can also comprise a collar i.e. an annular flange, which extends in a cantilever fashion from the end of the side wall opposite the bottom wall and is arranged on a plane orthogonal to said longitudinal axis.

Alternatively, capsules are known which comprise a cup-shaped body preferably made in one piece, for example made of a plastic material, defined by a tubular side wall and, at one end, by a bottom element having a central portion of a polygonal shape, for example hexagonal. In this case, the side wall has a polygonal shape in plan; in particular, the side wall has a hexagonal shape in plan, in which six side wall portions are connected to each other by means of six connecting sections. The connecting sections are internally weakened so as to allow, in use, to deform under the action of a force imparted from the outside by the user to pour out the liquid contained inside the compartment. Furthermore, the capsule can comprise a collar, i.e. an annular flange, which extends in a cantilever fashion from the end of the side wall opposite the bottom wall and is arranged on a plane orthogonal to said longitudinal axis.

Capsules for smoking articles of the type described above have small dimensions, in the order of one centimetre.

Typically, said capsules are produced by means of a manufacturing machine in which the capsules travel through a forming path via a moulding station of the cup-shaped body, a control station for the cup-shaped bodies which are obtained by moulding, a filling station with the liquid and a subsequent cutting station of the covering elements and a subsequent welding station of the covering elements to the cup-shaped bodies.

Within the production process, the cutting step of the covering elements and the subsequent welding step of the covering elements to the cup-shaped bodies are extremely delicate considering the very small dimensions of the covering elements; it has, in fact, been verified that the desired productivity cannot be obtained with a satisfactory level of efficiency and without compromising the welding quality of the covering elements to the cup-shaped bodies,

US2003/079440 A1 discloses a machine for the production of capsules. JPH05330503 A discloses a method and a machine to produce capsules for smoking articles.

### DESCRIPTION OF THE INVENTION

The object of the present invention is to provide a manufacturing machine for the production of capsules for smoking articles, in particular for filters, designed to contain a liquid to be used in the cooling of smoke which is free from the drawbacks of the state of the art and, at the same time, is simple and inexpensive to implement.

Another object of the present invention is to provide a method for the production of capsules for smoking articles, in particular for filters, designed to contain a liquid to be used in the cooling of smoke which is free from the drawbacks of the state of the art and, at the same time, is simple and inexpensive to implement.

According to the present invention, a method and a manufacturing machine are provided for the production of capsules for smoking articles, in particular for filters, designed to contain a liquid to be used in the cooling of smoke, as claimed in the appended claims.

### BRIEF DESCRIPTION OF DRAWINGS

The present invention will now be described with reference to the attached drawings, which illustrate some non-limiting embodiments thereof, wherein:
- Figures 1a to 1c respectively illustrate a perspective view, from below and in section, along the line c-c of a capsule made by the manufacturing machine which is the object of the present invention;
- Figure 2 is a block diagram that illustrates the method for the production of the capsules of Figures 1a-1c;
- Figure 3 is a perspective view of a manufacturing machine made according to the present invention;
- Figure 4 is a front view of a coupling station and of a welding station of the manufacturing machine of Figure 3;
- Figure 5 is a front view of the coupling station of figure 4;
- Figure 6 is a front view of a detail of the coupling station of Figure 5;
- Figure 7 is a further front view of the coupling station of Figure 4;
- Figure 8 illustrates an enlarged detail of Figure 7; and
- Figures 9 and 10 are front views of a welding station of the manufacturing machine of Figure 3 in two different operating modes.

### PREFERRED EMBODIMENTS OF THE INVENTION

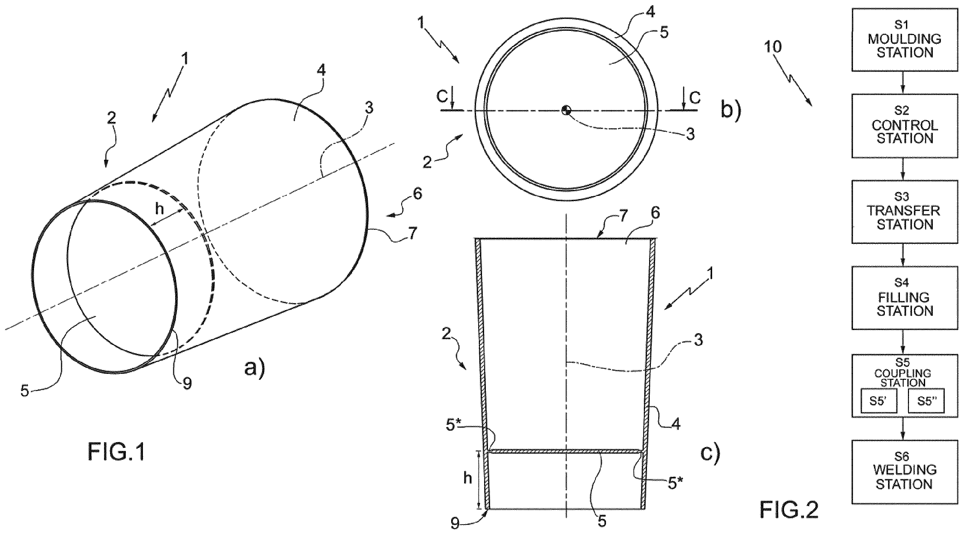

In Figure 1, number 1 denotes as a whole a capsule 1 for smoking articles, in particular for filters, designed to contain a liquid to be used in the cooling of smoke. In particular, the capsule 1 is designed to contain water or a mixture of water and a flavour.

The capsule 1 comprises a cup-shaped body 2 preferably made in one piece, for example made of plastic material, defined by a tubular side wall 4 and, at one end, by a circular bottom wall 5 or bottom element. The cup-shaped body 2 has a shape slightly tapered towards the bottom wall 5. Alternatively, the cup-shaped body 2 has a substantially cylindrical shape. The side wall 4 has a longitudinal axis 3 and delimits, with the bottom wall 5, a compartment 6, which is adapted to contain a predetermined amount of liquid. The side wall 4 has a circular shape in plan. According to a preferred alternative, the side wall 4 is provided with a plurality of ribs (not illustrated) which extend in a cantilever fashion from the outer surface of the side wall 4, extend over the entire length of the side wall 4 and are uniformly distributed around the longitudinal axis 3.

According to what is better illustrated in Figure 1c, the bottom wall 5 is connected at a height h of the side wall 4. In other words, the bottom wall 5 is not arranged flush with the lower edge 9 of the side wall 4 but fits at a height h with respect to said lower edge 9.

The connection between the bottom wall 5 and the inner surface of the side wall 4 is obtained by means of a weakened profile 5* (of reduced thickness) to allow, in use, the breakage under the action of a force imparted from the outside in order to pour out the liquid contained inside the compartment 6. The compartment 6 is open at the top and is closed by a cover 7 conveniently formed by a film or a wrap made of PET/PE. The capsule 1 comprises, furthermore, a collar defined by the upper surface of the side wall 4 to which the cover 7 is connected. Alternatively, the capsule 1 comprises a collar defined by an annular flange (not illustrated), which extends in a cantilever fashion from the end of the side wall 4 opposite the bottom wall 5 and is arranged on a plane orthogonal to said longitudinal axis 3.

In Figure 2 number 10 denotes, as a whole, a manufacturing machine for the production of the capsules 1 for smoking articles described above, which travel a forming path via a moulding station S1 of the semi-finished capsules 1 and, in particular, of the cup-shaped bodies 2, one or more check and control stations S2 for the collars and for the bottom walls 5, a transfer station S3 for transferring the cup-shaped bodies 2 into trays 9, a filling station S4 for filling the cup-shaped bodies 2 with the liquid, a coupling station S5 for coupling the cup-shaped bodies 2 to the covering elements 7 and a welding station S6 for welding the covering elements 7 to the respective cup-shaped bodies 2.

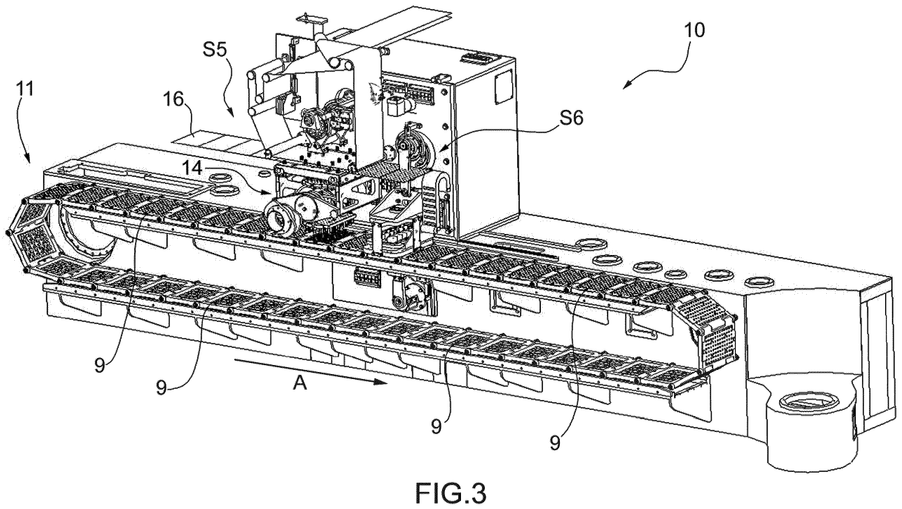

In particular, as better illustrated in Figure 3, the manufacturing machine 10 comprises a feeding system 11 which develops along a closed loop working path and comprises the filling station S4 with the liquid, the coupling station S5 for coupling the cup-shaped bodies 2 to the covering elements 7 and the welding station S6 for welding the covering elements 7 to the respective cup-shaped bodies 2 arranged along said feeding system 11.

The feeding system 11 is made by means of a conveyor 11 which receives the cup-shaped bodies 2 exiting the transfer station S3, and feeds them along the feeding direction A into trays 9 up to the next filling station S4 with the liquid. The trays 9 have a plurality of pockets 12, each designed to receive and house a respective cup-shaped body 2; the pockets 12 are typically divided into several rows equidistant from one another and distributed over the entire available surface of the tray 9. For example, in each tray 9 ninety-six pockets 12 are obtained, divided into eight rows of twelve pockets 12 each. Once the filling with the liquid has been completed, the trays 9 containing the cup-shaped bodies 2 are fed to the coupling station S5 with the covering elements 7.

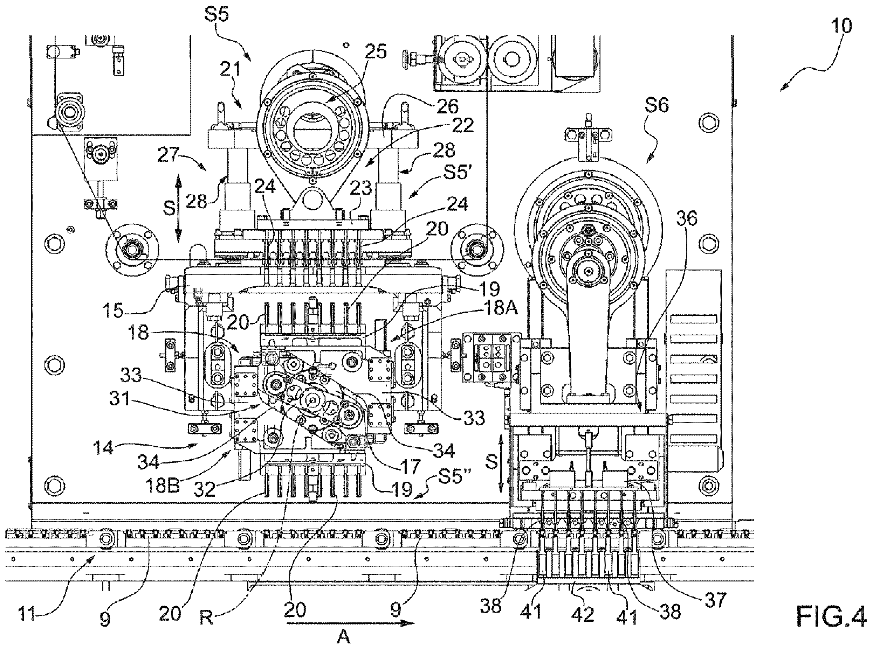

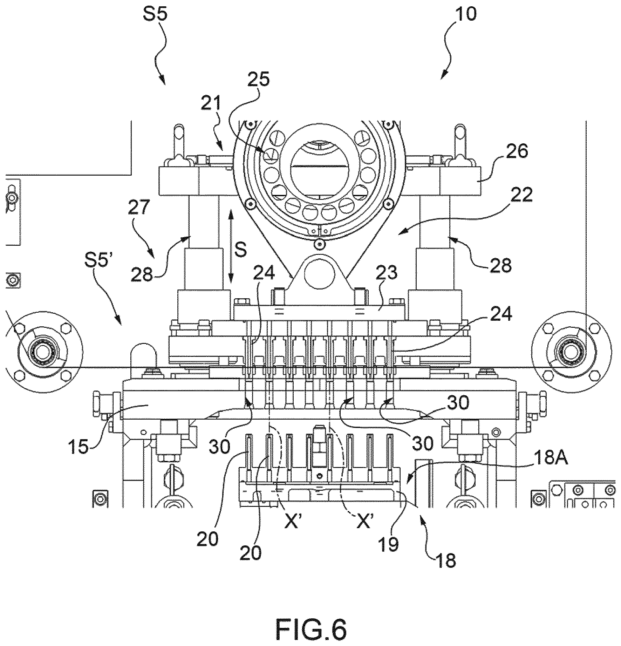

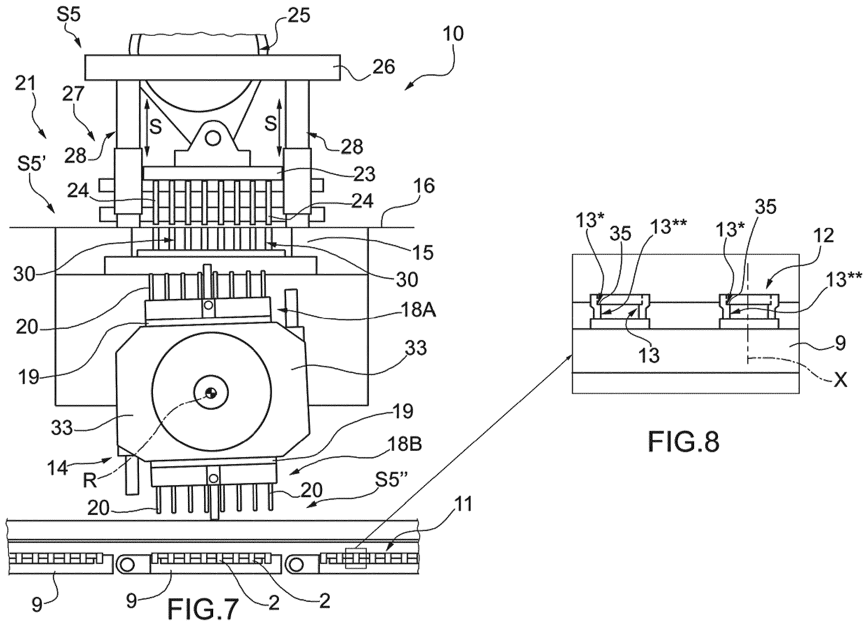

According to a preferred alternative, the pockets 12 are open at the bottom; in other words, each pocket 12 is defined by a through cavity formed in the tray 9 and is delimited by an inner surface 13 coaxial with an axis X (visible in Figure 8). As better illustrated in Figures 4 to 7, the coupling station S5 comprises a transfer drum 14 connected to a fixed frame 15 above which a strip 16 of plastic material is fed with an intermittent motion.

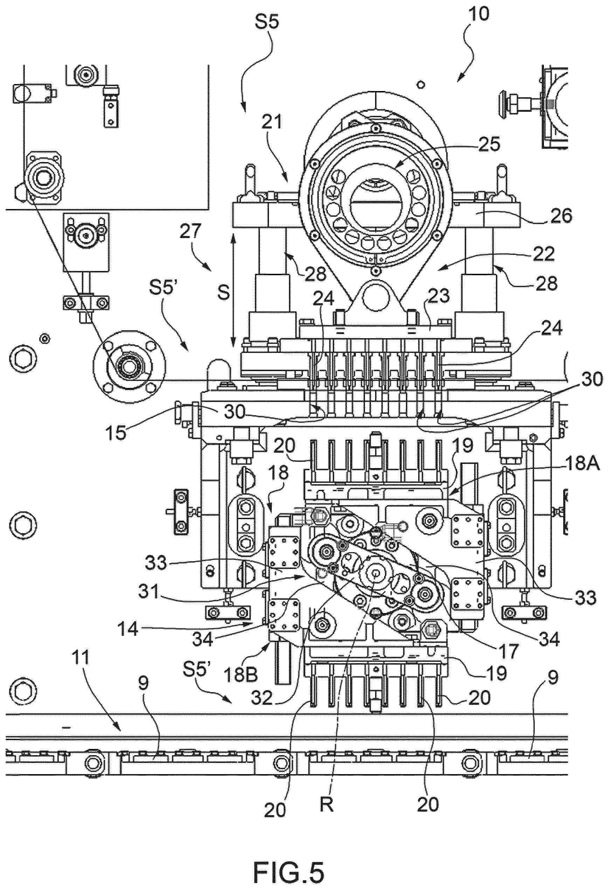

The transfer drum 14 is formed by a central body 17 which rotates with intermittent motion around a substantially horizontal rotation axis R and supports a pair of movable fittings 18, denoted with 18A and 18B, which are equal and diametrically opposite to each other in respect to the rotation axis R, each of which is movable with respect to the central body 17 along the vertical direction S, orthogonal to the rotation axis R and to the feeding direction A so as to move between a transfer position (assumed during the rotations of the central body 17 around to the rotation axis R and illustrated in Figure 7) and a working position (assumed during the stopping step of the central body 17 and illustrated in Figures 4 and 5), and vice versa.

Each movable fitting 18 supports a sucking holding plate 19 provided with a plurality of sucking heads 20 formed as tubular ducts parallel to each other. The arrangement of the sucking heads 20 reproduces the arrangement of the pockets 12 in the trays 9. In particular, each movable fitting 18 comprises ninety-six sucking heads 20 divided into eight rows of twelve sucking heads 20 each.

According to a preferred alternative, the transfer drum 14 has a pneumatic suction and blowing system provided with a sucking pump (not illustrated), which is connected to each sucking head 20 by means of a respective suction duct so as to place each sucking head 20 in communication with the sucking pump.

The coupling station S5 is in turn divided into a cutting area S5' for cutting the covering elements 7 and a transfer area S5" for transferring the covering elements 7 into the pockets 12.

The cutting area S5' for cutting the covering elements 7 is arranged at the upper part of the transfer drum 14 while the transfer area S5" for transferring the covering elements 7 is diametrically opposite to the cutting area S5' and obtained at the lower part of the transfer drum 14 facing the conveyor 11 which feeds the cup-shaped bodies 2 into the trays 9.

When at the cutting area S5', each movable fitting 18 cooperates with a cutting member 21 so as to obtain the covering elements 7; the cutting member 21 comprises, in turn, a cutting device 22 in which a plate 23 is provided with a plurality of cutting elements 24 formed as mutually parallel tubular bodies and provided, at one end, with a respective sharp edge. The arrangement of the cutting elements 24 reproduces the arrangement of the pockets 12 inside the trays 9 and of the sucking heads 20. In particular, the cutting member 21 comprises ninety-six cutting elements 24 divided into eight rows of twelve cutting elements 24 each.

The plate 23 is movable between two positions along the vertical direction S. In particular, the plate 23 is movable between a rest position and an advanced cutting position, and vice versa. The movement of the plate 23 is directly controlled by an eccentric element 25 which receives motion from suitable actuation means. The cutting member 21 further comprises a fixed frame 26 connected to the eccentric element 25 and a movable frame 27, in turn comprising a guide system 28 preferably provided with ball bushings, carried by the fixed frame 26, arranged according to the corners of a parallelepiped defined by the frame 26 and connected to the fixed frame 15.

The fixed frame 15 is interposed between the cutting member 21 and the transfer drum 14; an upper surface of the fixed frame 15 defines a plane for feeding the strip 16 of plastic material unwound by a reel. Upon exit from the cutting area S5', after having obtained the covering elements 7, the waste of the strip 16 of plastic material is again rewound onto a reel through a plurality of return rollers or, alternatively, the waste of the strip 16 of plastic material is shredded.

In the fixed frame 15 a plurality of through openings 30 are formed, which are provided with respective axes X', substantially vertical and parallel to each other, inside which the sucking heads 20, in use, slide. The arrangement of the through openings 30 reproduces the arrangement of the pockets 12 in the trays 9, of the sucking heads 20 and of the cutting elements 24. The through openings 30 are arranged at the cutting elements 24; in particular, each through opening 30 is directly facing a respective cutting element 24. Even more in detail, in the fixed frame 15 ninety-six through openings 30 are obtained, which are divided into eight rows of twelve through openings 30 each.

The transfer drum 24 comprises an actuator system 31 for the movable fittings 18, which is obtained by means of an arm 32 connected to the central body 17 and rotatable relative to the central body 17 around the rotation axis R. Each of the two movable fittings 18 is connected to a respective support bracket 33, having, in front view, a substantially L-shape. Each support bracket 33 has an inner profile complementary to the profile of the arm 32. Each support bracket 33 is connected to a respective end portion of the arm 32 with the interposition of a connecting rod 34. Each connecting rod 34 is rigidly connected with a first end to the corresponding support bracket 33 by means of suitable fixing means and, with a second end thereof, to the respective end portion of the arm 32 by means of suitable fixing means. Each connecting rod 34 can be connected alternately to a front surface or to a rear surface of the corresponding support bracket 33 and to the corresponding end portion of the arm 32.

In use, the transfer drum 14 performs a 180° rotation around its rotation axis R and stops, thus arranging the movable fitting 18A in the cutting area S5' and the movable fitting 18B at the transfer area S5" of the covering elements 7. While the transfer drum 14 is stationary, the arm 32 performs a partial rotation in a clockwise (or possibly anti-clockwise) direction around the rotation axis R so as to arrange both movable fittings 18 in the working position. In particular, as regards the movable fitting 18A, the sucking holding plate 19 is raised and each sucking head 20 is inserted inside a respective through opening 30. At the same time, the movement of the plate 23 which moves downwards from the rest position to the advanced cutting position along the vertical direction S is controlled, thus intercepting the strip 16 of plastic material and obtaining for each cutting element 24 a respective covering element 7. During the cutting step, the pneumatic system is activated so that each sucking head 20 holds the respective covering element 7. The movement of the plate 23, which moves upwards from the advanced cutting position to the rest position along the vertical direction S, is therefore controlled, and, at the same time, the arm 32 performs a partial rotation in an anti-clockwise (or clockwise) direction around the rotation axis R so as to place both movable fittings 18 in the moving position and extract the sucking heads 20 of the movable fitting 18A from the respective through openings 30. The transfer drum 24 then rotates by 180° around the rotation axis R and stops, thus arranging the movable fitting 18B at the cutting area S5' and the movable fitting 18A at the transfer area S5" of the covering elements 7.

The movable fitting 18A stops in a position directly facing a tray 9. While the transfer drum 24 is still, the arm 32 again performs the partial rotation in a clockwise (or anti-clockwise) direction around the rotation axis R so as to be arranged in the working position in which each sucking head 20 is arranged, facing and near a respective pocket 12. The suction of the pneumatic system is then deactivated so that each covering element 7 is received inside a respective pocket 12 of the tray 9; to facilitate the transfer of the covering element 7 inside the respective pocket 12, the blowing of the pneumatic system is activated simultaneously with the deactivation of the suction. The movement of the arm 32, which performs the partial rotation in an anti-clockwise (or clockwise) direction around the rotation axis R is then again controlled, so as to be arranged in the movement position. The transfer drum 24 then rotates by 180° around its rotation axis R in order to return back to the position where the movable fitting 18A is arranged, at the cutting area S5', and the movable fitting 18B is arranged at the transfer area S5" of the covering elements 7.

As better illustrated in Figure 8, the inner surface 13 of the pockets 12 has an annular abutment 35 designed to define a seat in which the covering element 7 is housed above the respective cup-shaped body 2. In other words, the surface 13 does not have a constant diameter and is, on the contrary, divided into a lower portion 13** designed to house a respective cup-shaped body 2 and an upper portion 13*, which has a diameter larger than the lower portion 13**, in which the covering elements 7 can be housed.

Once the covering elements 7 have been inserted into each pocket 12 of the tray 9, the tray 9 is again conveyed along the feeding direction A until it stops at the welding station S6 for welding the covering elements 7 to the cup-shaped bodies 2.

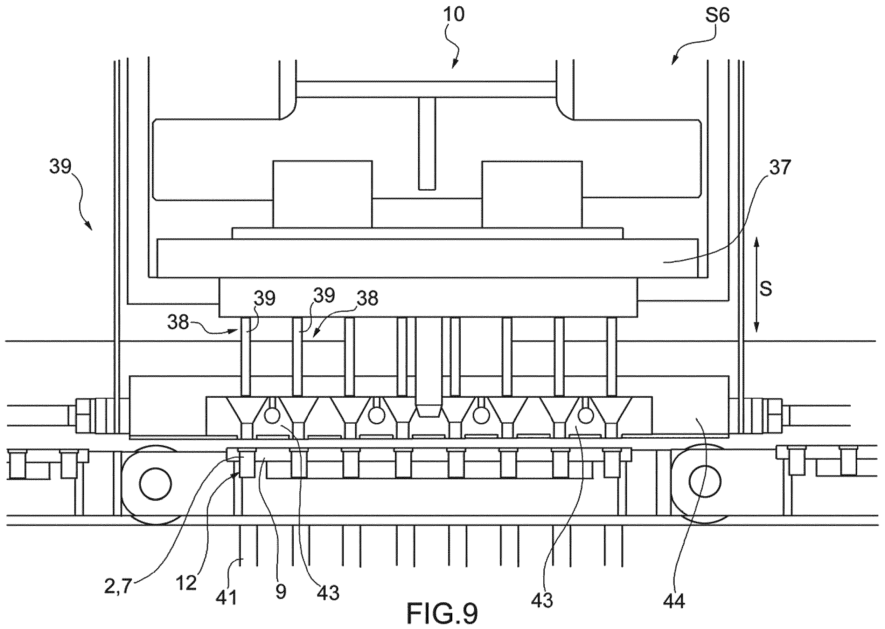

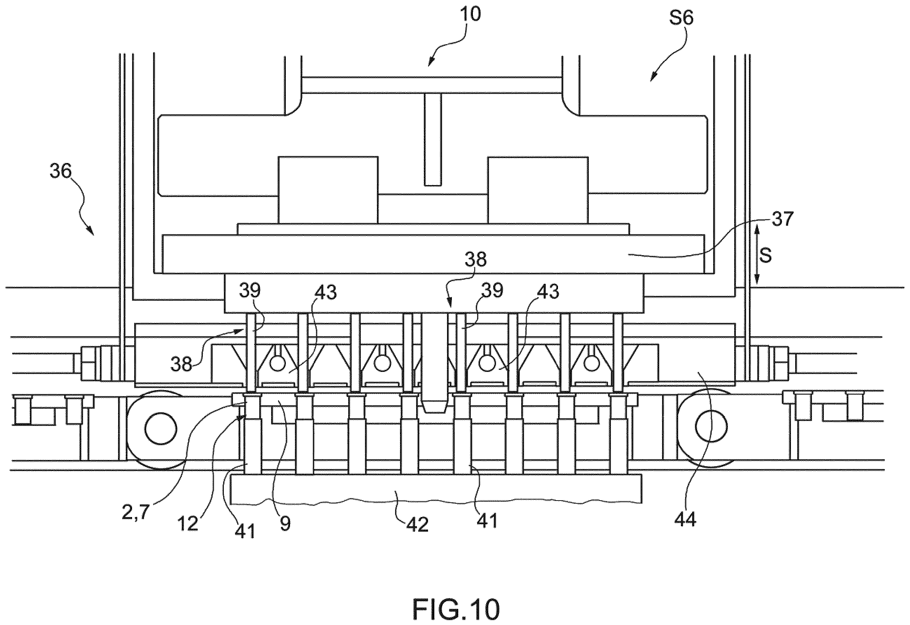

The welding station S6 comprises a welding unit 36 obtained through a support 37, movable in the vertical direction S, provided with a suction circuit obtained through a plurality of suction heads 38, and a sucking pump (not illustrated) which is connected to each suction head 38 via a respective suction duct so as to place each suction head 38 in communication with the sucking pump. According to what has been illustrated in Figures 9 and 10, each suction head 38 comprises a body 39 that longitudinally develops along a vertical axis and comprises an end arranged so as to contact a corresponding covering element 7. The arrangement of the suction heads 38 reproduces the arrangement of the pockets 12 inside the trays 9. In particular, the movable support 37 comprises ninety-six suction heads 38 divided into eight rows of twelve suction heads 38 each. Each suction head 38 cooperates with a respective striker element 41 for lifting the cup-shaped bodies 2 towards the suction head 38. The striker elements 41 are connected to a common support 42, which is also movable along the vertical direction S. Clearly, also the arrangement of the striker elements 41 reproduces the arrangement of the pockets 12 inside the trays 9 and of the suction heads 38. In particular, the support 42 comprises ninety-six striker elements 41 divided into eight rows of twelve striker elements 41 each.

Each suction head 38 cooperates with a respective welder 43, for example a sonotrode, so as to obtain the weld of the covering element 7 to the cup-shaped body 2, for example by means of ultrasound. Each welder 43 is cooperating with a respective assembly formed by the suction head 38 and the respective striker element 41. The welders 43 are carried by a common support element 44, also movable in the vertical direction S, provided with a plurality of welders 43.

The arrangement of the welders 43 thus reproduces the arrangement of the pockets 12 inside the trays 9. In particular, the support element 44 comprises ninety-six welders 43 divided into eight rows of twelve welders 43 each.

In an alternative embodiment, the welding station S6 can comprise a welding unit obtained by means a movable support in the vertical direction S provided with a plurality of striker heads each comprising a body that longitudinally develops along a vertical axis and comprises an end arranged to contact a corresponding covering element 7 (said striker heads are similar to the suction heads 38 previously described but do not provide suction). The arrangement of the striker heads reproduces the arrangement of the pockets 12 inside the trays 9. In particular, the movable support comprises ninety-six striker heads divided into eight rows of twelve striker heads each.

During the welding process, the following steps occur in succession:
- the conveyor 11 transports the tray 9 and stops it at the welding station S6 under the welding unit 36;
- the movable support 37 is moved along the vertical direction S downwards until each suction head 38 is arranged facing and near a respective covering element 7 carried by the tray 9;
- the suction circuit is activated so that each covering element 7 is held by means of suction by the suction head 38;
- at the same time, the support 42 is actuated and moved upwards along the vertical direction S so that each striker element 41 intercepts a respective cup-shaped body 2 and lifts it slightly until the cup-shaped body 2 and the respective covering element 7 are arranged in substantial contact with each other (they could be placed in contact or close to each other);
- the support element 44 that carries the welders 43, thereon, is moved along the vertical direction S downwards (this step can be carried out simultaneously with the downward movement of the movable support 37);
- the support 42 and the support 37 are moved (of the same length) along the vertical direction S upwards until each covering element 7 strikes against a welder 43 and the actual welding is carried out;
- the support 42 is actuated and moved downwards along the vertical direction S; similarly, the movable support 37 is actuated and moved downwards along the vertical direction S so that each suction head 38 accompanies (by pushing) the individual capsules 1 inside the pockets 12 of the tray 9 which is then moved to the outlet by the manufacturing machine 10.

The activation step of the suction circuit ensures that each covering element 7 is held by means of suction by the suction head 38 and the actual welding step takes place substantially simultaneously. In this way a uniform welding of the covering element 7 is obtained on the collar 8. Advantageously in this way, by crushing the capsule 1 it is ensured that the latter collapses at the bottom wall. In fact, in the case of a nonuniform welding of the covering element 7 on the collar it could happen that, by crushing the capsule 1, the detachment of the covering element 7 from the collar is determined; this would cause a wrong outlet direction of the liquid from the capsule 1.

The manufacturing machine 10 described up to now has various advantages. In particular, it allows the handling of small components such as the cup-shaped bodies 2 and the covering elements 7, while ensuring good performance in terms of productivity and without compromising the quality of the welding of the covering elements 7 to the respective cup-shaped bodies 2.

## Claims

1. A manufacturing machine (10) for the production of capsules (1) for smoking articles, in particular for filters, designed to contain a liquid to be used in the cooling of smoke; wherein each capsule (1) comprises a cup-shaped body (2) which is defined by a side wall (4) and, at one end, by a bottom wall (5); the side wall (4) has a longitudinal axis (3) and delimits, with the bottom wall (5), a compartment (6) which is designed to contain a predetermined amount of liquid; the capsule (1) comprising a covering element (7), which is coupled to a portion of the side wall (4) defining a collar in the area of the end opposite the bottom wall (5); the manufacturing machine (10) comprises:
a feeding system (11), which feeds the semi-finished capsules (1) along a forming path;
a number of operating stations (S4, S5, S6), which are arranged along the forming path and comprise a coupling station (S5) for coupling the covering elements (7) to the cup-shaped bodies (2); wherein the coupling station (S5) comprises a transfer drum (14), which rotates around a rotation axis (R) with an intermittent motion and above which a strip (16) of plastic material is fed; the transfer drum (14) supports a pair of movable fittings (18), which are designed to cooperate with a cutting member (21) so as to obtain the covering elements (7) from the strip (16) of plastic material, hold them by means of suction during a 180° rotation around the rotation axis (R) and transfer them to the feeding system (11); and
a welding station (S6) for welding the covering elements (7) to the cup-shaped bodies (2), which is arranged downstream of the coupling station (S5);
the machine is **characterized in that** the covering elements (7) are transferred into respective pockets (12) of the feeding system (11) and each of said pockets (12) contains a respective cup-shaped body (2) and in the inner surface (13) of each pocket (12) an annular abutment (35) is formed, which is designed to define a seat for the covering element (7) above the respective cup-shaped body (2).

2. The machine according to claim 1, wherein each movable fitting (18) supports a sucking holding plate (19), which is provided with a plurality of sucking heads (20); and wherein the transfer drum (14) has a suction device that is provided with a sucking pump, which is connected to each sucking head (20) .

3. The machine according to claim 2, wherein the cutting member (21) comprises, in turn, a cutting device (22), wherein a first support (23) moving along a substantially vertical direction (S) carries a plurality of cutting elements (24) connected thereto; the arrangement of said cutting elements (24) reproduces the arrangement of the sucking heads (20), so that each cutting element (24) cooperates with a respective sucking head (20) to obtain a covering element (7).

4. The machine according to claim 2 or 3 and comprising a fixed frame (15) interposed between the cutting member (21) and the transfer drum (14) and whose upper surface defines a feeding plane for the strip (16) of plastic material; wherein in the fixed frame (15) a plurality of through openings (30) are obtained, whose arrangement reproduces the arrangement of the sucking heads (20) and inside which the sucking heads (20) slide along the substantially vertical direction (S).

5. The machine according to anyone of the preceding claims, wherein the transfer drum (24) comprises a central body (17) and an actuator system (31) for the movable fittings (18), which is obtained by means of an arm (32) connected to the central body (17) and rotatable relative to the central body (17) around the rotation axis (R).

6. The machine according to claim 5, wherein each of the two movable fittings (18) is connected to a respective support bracket (33), which has an inner profile that is complementary to the profile of the arm (32).

7. The machine according to anyone of the preceding claims, wherein each movable fitting (18) supports a sucking holding plate (19) provided with a plurality of sucking heads (20); and wherein the arrangement of said pockets (12) reproduces the arrangement of the sucking heads (20).

8. The machine according to any one of the preceding claims, wherein the pockets (12) are obtained in trays (9), which are fed by the feeding system (11) along the forming path.

9. The machine as according to anyone of the preceding claims, wherein the welding station (S6) comprises a welding unit (36) comprising a support (44) which is movable along a substantially vertical direction (S) and is provided with a plurality of welders (43) so as to simultaneously weld a plurality of covering elements (7) to the respective cup-shaped bodies (2) .

10. The machine according to claim 9, wherein the welding unit (36) is provided with a plurality of suction heads (38) for striking the respective covering element (7) and, wherein each of the suction heads (38) cooperates with a respective welder (43) .

11. The machine according to claim 10, wherein the welding unit (36) is provided with a suction device comprising a sucking pump, which is connected to the suction heads (38) so as to hold, by means of suction, the respective covering element (7).

12. The machine according to claim 10 or 11, wherein each suction head (38) cooperates with a respective striker element (41) designed to lift the cup-shaped bodies (2) and support said cup-shaped bodies (2) during the welding step.

13. A method for the production of capsules (1) for smoking articles, in particular for filters, designed to contain a liquid to be used in the cooling of smoke carried out by a machine realized according to anyone of the claims from 1 to 12; wherein each capsule (1) comprises a cup-shaped body (2) defined by a side wall (4) and, at one end, by a bottom wall (5); the side wall (4) has a longitudinal axis (3) and delimits, with the bottom wall (5), a compartment (6), which is designed to contain a predetermined amount of liquid; the capsule (1) comprising a covering element (7), which is coupled to a portion of the side wall (4) defining a collar at the end opposite the bottom wall (5); the method comprises:
feeding the cup-shaped bodies (2) along a forming path inside respective pockets (12) of a feeding system (11);
obtaining the covering elements (7) by cutting a strip (16) of plastic material;
holding the covering elements (7) by means of suction during a 180° rotation around a rotation axis (R);
transferring each covering element (7) into a respective pocket (12) of the feeding system (11);
welding the covering elements (7) to the respective cup-shaped bodies (2).

## Patentansprüche

1. Fertigungsmaschine (10) zur Herstellung von Kapseln (1) für Rauchwaren, insbesondere für Filter, die ausgelegt sind, eine bei dem Kühlen von Rauch zu verwendende Flüssigkeit zu enthalten; wobei jede Kapsel (1) einen becherförmigen Körper (2) umfasst, der durch eine Seitenwand (4) und an einem Ende durch eine Bodenwand (5) definiert ist; die Seitenwand (4) eine Längsachse (3) aufweist und mit der Bodenwand (5) eine Kammer (6) begrenzt, die ausgelegt ist, eine vorbestimmte Flüssigkeitsmenge zu enthalten; die Kapsel (1) ein Abdeckelement (7) umfasst, das an einen Abschnitt der Seitenwand (4) gekoppelt ist, der einen Kragen in dem Bereich des Endes gegenüber der Bodenwand (5) definiert; wobei die Fertigungsmaschine (10) umfasst:
ein Zuführsystem (11), das die halbfertigen Kapseln (1) entlang eines Formungspfads zuführt;
mehrere Arbeitsstationen (S4, S5, S6), die entlang des Formungspfads angeordnet sind und eine Kopplungsstation (S5) zum Koppeln der Abdeckelemente (7) an die becherförmigen Körper (2) umfassen; wobei die Kopplungsstation (S5) eine Transfertrommel (14) umfasst, die sich mit einer intermittierenden Bewegung um eine Drehachse (R) dreht und über der ein Streifen (16) aus Kunststoffmaterial zugeführt wird; die Transfertrommel (14) ein Paar bewegbarer Beschläge (18) trägt, die ausgelegt sind, mit einem Schneidelement (21) zusammenzuwirken, um die Abdeckelemente (7) aus dem Streifen (16) aus Kunststoffmaterial zu erhalten, sie mittels Sog während einer 180° Drehung um die Drehachse (R) zu halten und sie zum Zuführsystem (11) zu transferieren; und
eine Schweißstation (S6) zum Schweißen der Abdeckelemente (7) an die becherförmigen Körper (2), die stromabwärts der Kopplungsstation (S5) angeordnet ist; wobei
die Maschine **dadurch gekennzeichnet ist, dass** die Abdeckelemente (7) in jeweilige Taschen (12) des Zuführsystems (11) transferiert werden und jede der Taschen (12) einen jeweiligen becherförmigen Körper (2) enthält und in der Innenfläche (13) jeder Tasche (12) ein ringförmiger Anschlag (35) gebildet ist, der ausgelegt ist, eine Aufnahme für das Abdeckelement (7) über dem jeweiligen becherförmigen Körper (2) zu definieren.

2. Maschine nach Anspruch 1, wobei jeder bewegbare Beschlag (18) eine Saughalteplatte (19) trägt, die mit mehreren Saugköpfen (20) versehen ist; und wobei die Transfertrommel (14) eine mit einer Saugpumpe versehene Ansaugvorrichtung aufweist, die mit jedem Saugkopf (20) verbunden ist.

3. Maschine nach Anspruch 2, wobei das Schneidelement (21) wiederum eine Schneidvorrichtung (22) umfasst, in der ein erster Träger (23), der sich in einer im Wesentlichen vertikalen Richtung (S) bewegt, mehrere mit ihm verbundene Schneidelemente (24) trägt, wobei die Anordnung der Schneidelemente (24) die Anordnung der Saugköpfe (20) derart nachbildet, dass jedes Schneidelement (24) mit einem jeweiligen Saugkopf (20) zusammenwirkt, um ein Abdeckelement (7) zu erhalten.

4. Maschine nach Anspruch 2 oder 3 und umfassend einen feststehenden Rahmen (15), der zwischen das Schneidelement (21) und die Transfertrommel (14) eingefügt ist und dessen Oberseite eine Zuführebene für den Streifen (16) aus Kunststoffmaterial definiert; wobei in dem feststehenden Rahmen (15) mehrere Durchgangsöffnungen (30) erhalten werden, deren Anordnung die Anordnung der Saugköpfe (20) nachbildet und in denen die Saugköpfe (20) in der im Wesentlichen vertikalen Richtung (S) gleiten.

5. Maschine nach einem der vorhergehenden Ansprüche, wobei die Transfertrommel (24) einen Zentralkörper (17) und ein Aktorsystem (31) für die bewegbaren Beschläge (18), das mittels eines Arms (32) erhalten wird, der mit dem Zentralkörper (17) verbunden und in Bezug auf den Zentralkörper (17) um die Drehachse (R) drehbar ist, umfasst.

6. Maschine nach Anspruch 5, wobei jeder der zwei bewegbaren Beschläge (18) mit einem jeweiligen Tragbügel (33), der ein Innenprofil besitzt, das komplementär zum Profil des Arms (32) ist, verbunden ist.

7. Maschine nach einem der vorhergehenden Ansprüche, wobei jeder bewegbare Beschlag (18) eine Saughalteplatte (19) trägt, die mit mehreren Saugköpfen (20) versehen ist; und wobei die Anordnung der Taschen (12) die Anordnung der Saugköpfe (20) nachbildet.

8. Maschine nach einem der vorhergehenden Ansprüche, wobei die Taschen (12) in Fächern (9) erhalten werden, die durch das Zuführsystem (11) auf dem Formungspfad eingespeist werden.

9. Maschine nach einem der vorhergehenden Ansprüche, wobei die Schweißstation (S6) eine Schweißeinheit (36) umfasst, die einen Träger (44) umfasst, der in einer im Wesentlichen vertikalen Richtung (S) bewegbar ist und mit mehreren Schweißeinrichtungen (43) versehen ist, um mehrere Abdeckelemente (7) gleichzeitig an die jeweiligen becherförmigen Körper (2) zu schweißen.

10. Maschine nach Anspruch 9, wobei die Schweißeinheit (36) mit mehreren Ansaugköpfen (38) zum Anschlagen des jeweiligen Abdeckelements (7) versehen ist und wobei jeder Ansaugkopf (38) mit einer jeweiligen Schweißeinrichtung (43) zusammenwirkt.

11. Maschine nach Anspruch 10, wobei die Schweißeinheit (36) mit einer Ansaugvorrichtung versehen ist, die eine Saugpumpe umfasst, die mit den Ansaugköpfen (38) verbunden ist, um das jeweilige Abdeckelement (7) mittels Sog zu halten.

12. Maschine nach Anspruch 10 oder 11, wobei jeder Ansaugkopf (38) mit einem jeweiligen Anschlagelement (41) zusammenwirkt, das ausgelegt ist, die becherförmigen Körper (2) anzuheben und die becherförmigen Körper (2) während des Schweißschritts zu tragen.

13. Verfahren zur Herstellung von Kapseln (1) für Rauchwaren, insbesondere für Filter, die ausgelegt sind, eine bei dem Kühlen von Rauch zu verwendende Flüssigkeit zu enthalten, das durch eine Maschine ausgeführt wird, die gemäß einem der Ansprüche 1 bis 12 realisiert ist; wobei jede Kapsel (1) einen becherförmigen Körper (2) umfasst, der durch eine Seitenwand (4) und an einem Ende durch eine Bodenwand (5) definiert ist; die Seitenwand (4) eine Längsachse (3) aufweist und mit der Bodenwand (5) eine Kammer (6) begrenzt, die ausgelegt ist, eine vorbestimmte Flüssigkeitsmenge zu enthalten; die Kapsel (1) ein Abdeckelement (7) umfasst, das an einen Abschnitt der Seitenwand (4), der einen Kragen im Bereich des Endes gegenüber der Bodenwand (5) definiert, gekoppelt ist; und das Verfahren umfasst:
Zuführen der becherförmigen Körper (2) auf einem Formungspfad in jeweilige Taschen (12) eines Zuführsystems (11);
Erhalten der Abdeckelemente (7) durch Schneiden eines Streifens (16) aus Kunststoffmaterial;
Halten der Abdeckelemente (7) mittels Sog während einer 180° Drehung um eine Drehachse (R);
Transferieren jedes Abdeckelements (7) in eine jeweilige Tasche (12) des Zuführsystems (11) und
Schweißen der Abdeckelemente (7) an die jeweiligen becherförmigen Körper (2).

## Revendications

1. Machine de fabrication (10) pour la production de capsules (1) pour articles à fumer, en particulier pour des filtres, conçues pour contenir un liquide à utiliser pour le refroidissement de la fumée ; où chaque capsule (1) comprend un corps en forme de coupelle (2) qui est défini par une paroi latérale (4) et, au niveau d'une extrémité, par une paroi inférieure (5) ; la paroi latérale (4) a un axe longitudinal (3) et délimite, avec la paroi inférieure (5), un compartiment (6) qui est conçu pour contenir une quantité prédéterminée de liquide ; la capsule (1) comprenant un élément de recouvrement (7) qui est couplé à une partie de la paroi latérale (4) définissant un collier dans la zone de l'extrémité opposée à la paroi inférieure (5) ; la machine de fabrication (10) comprenant :
un système d'alimentation (11) qui amène les capsules semi-finies (1) le long d'une trajectoire de formation ;
un certain nombre de stations opérationnelles (S4, S5, S6) qui sont agencées le long de la trajectoire de formation et comprennent une station de couplage (S5) pour coupler les éléments de recouvrement (7) aux corps en forme de coupelle (2) ; où la station de couplage (S5) comprend un tambour de transfert (14) qui tourne autour d'un axe de rotation (R) avec un mouvement intermittent et au-dessus duquel une bande (16) en matière plastique est alimentée ; le tambour de transfert (14) supporte une paire de raccords mobiles (18) qui sont conçus pour coopérer avec un organe de coupe (21) afin d'obtenir les éléments de recouvrement (7) à partir de la bande (16) en matière plastique, les maintenir au moyen d'aspiration pendant une rotation à 180° autour de l'axe de rotation (R) et les transférer vers le système d'alimentation (11) ; et
une station de soudage (S6) pour souder les éléments de recouvrement (7) sur les corps en forme de coupelle (2), qui est agencée en aval de la station de couplage (S5) ;
la machine étant **caractérisée en ce que** les éléments de recouvrement (7) sont transférés dans des poches (12) respectives du système d'alimentation (11) et chacune desdites poches (12) contient un corps en forme de coupelle (2) respectif et dans la surface interne (13) de chaque poche (12) est formée une butée annulaire (35), qui est conçue pour définir un siège pour l'élément de recouvrement (7) au-dessus du corps en forme de coupelle (2) respectif.

2. Machine selon la revendication 1, dans laquelle chaque raccord mobile (18) supporte une plaque de maintien d'aspiration (19) qui est prévue avec une pluralité de têtes d'aspiration (20) ; et dans laquelle le tambour de transfert (14) a un dispositif d'aspiration qui est prévu avec une pompe d'aspiration qui est raccordée à chaque tête d'aspiration (20).

3. Machine selon la revendication 2, dans laquelle l'organe de coupe (21) comprend, à son tour, un dispositif de coupe (22), où un premier support (23) se déplaçant le long d'une direction sensiblement verticale (S) porte une pluralité d'éléments de coupe (24) raccordés à ce dernier ; l'agencement desdits éléments de coupe (24) reproduit l'agencement des têtes d'aspiration (20), de sorte que chaque élément de coupe (24) coopère avec une tête d'aspiration (20) respective afin d'obtenir un élément de recouvrement (7).

4. Machine selon la revendication 2 ou 3, et comprenant un bâti fixe (15) intercalé entre l'élément de coupe (21) et le tambour de transfert (14) et dont la surface supérieure définit un plan d'alimentation pour la bande (16) en matière plastique ; dans laquelle, dans le bâti fixe (15), une pluralité d'ouvertures débouchantes (30) sont obtenues, dont l'agencement reproduit l'agencement des têtes d'aspiration (20) et à l'intérieur desquelles les têtes d'aspiration (20) coulissent le long de la direction sensiblement verticale (S).

5. Machine selon l'une quelconque des revendications précédentes, dans laquelle le tambour de transfert (24) comprend un corps central (17) et un système d'actionneur (31) pour les raccords mobiles (18) qui est obtenu au moyen d'un bras (32) raccordé au corps central (17) et pouvant tourner par rapport au corps central (17) autour de l'axe de rotation (R) .

6. Machine selon la revendication 5, dans laquelle chacun des deux raccords mobiles (18) est raccordé à une console de support (33) respective qui a un profil interne qui est complémentaire du profil du bras (32).

7. Machine selon l'une quelconque des revendications précédentes, dans laquelle chaque raccord mobile (18) supporte une plaque de maintien d'aspiration (19) prévue avec une pluralité de têtes d'aspiration (20) ; et dans laquelle l'agencement desdites poches (12) reproduit l'agencement des têtes d'aspiration (20).

8. Machine selon l'une quelconque des revendications précédentes, dans laquelle les poches (12) sont obtenues dans des plateaux (9) qui sont alimentés par le système d'alimentation (11) le long de la trajectoire de formation.

9. Machine selon l'une quelconque des revendications précédentes, dans laquelle la station de soudage (S6) comprend une unité de soudage (36) comprenant un support (44) qui est mobile le long d'une direction sensiblement verticale (S) et est prévu avec une pluralité de machines à souder (43) afin de souder simultanément une pluralité d'éléments de recouvrement (7) sur les corps en forme de coupelle (2) respectifs.

10. Machine selon la revendication 9, dans laquelle l'unité de soudage (36) est prévue avec une pluralité de têtes d'aspiration (38) pour percuter l'élément de recouvrement (7) respectif, et dans laquelle chacune des têtes d'aspiration (38) coopère avec une machine à souder (43) respective.

11. Machine selon la revendication 10, dans laquelle l'unité de soudage (36) est prévue avec un dispositif d'aspiration comprenant une pompe d'aspiration, qui est raccordée aux têtes d'aspiration (38) afin de maintenir, au moyen de l'aspiration, l'élément de recouvrement (7) respectif.

12. Machine selon la revendication 10 ou 11, dans laquelle chaque tête d'aspiration (38) coopère avec un élément de percussion (41) respectif conçu pour lever les corps en forme de coupelle (2) et supporter lesdits corps en forme de coupelle (2) pendant l'étape de soudage.

13. Procédé pour la production de capsules (1) pour articles à fumer, en particulier pour des filtres, conçues pour contenir un liquide à utiliser pour le refroidissement de la fumée, mis en œuvre par une machine réalisée selon l'une quelconque des revendications 1 à 12 ; où chaque capsule (1) comprend un corps en forme de coupelle (2) défini par une paroi latérale (4) et, au niveau d'une extrémité, par une paroi inférieure (5) ; la paroi latérale (4) a un axe longitudinal (3) et délimite, avec la paroi inférieure (5), un compartiment (6) qui est conçu pour contenir une quantité prédéterminée de liquide ; la capsule (1) comprenant un élément de recouvrement (7) qui est couplé à une partie de la paroi latérale (4) définissant un collier au niveau de l'extrémité opposée à la paroi inférieure (5) ; le procédé comprend les étapes consistant à :
amener les corps en forme de coupelle (2) le long d'une trajectoire de formation à l'intérieur de poches (12) respectives d'un système d'alimentation (11) ;
obtenir les éléments de recouvrement (7) en coupant une bande (16) en matière plastique ;
maintenir les éléments de recouvrement (7) au moyen de l'aspiration pendant une rotation à 180° autour d'un axe de rotation (R) ;
transférer chaque élément de recouvrement (7) dans une poche (12) respective du système d'alimentation (11) ;
souder les éléments de recouvrement (7) sur les corps en forme de coupelle (2) respectifs.
